(19) **Europäisches Patentamt / European Patent Office / Office européen des brevets**

(11) **EP 4 322 133 B1**

(12) **EUROPEAN PATENT SPECIFICATION**

(45) Date of publication and mention
of the grant of the patent:
**28.01.2026 Bulletin 2026/05**

(21) Application number: **21940683.2**

(22) Date of filing: **17.05.2021**

(51) International Patent Classification (IPC):
**G08G 1/16** *(2006.01)*    **G06V 20/58** *(2022.01)*

(52) Cooperative Patent Classification (CPC):
**G08G 1/205; G06V 20/58; G08G 1/096716;
G08G 1/096758; G08G 1/096791; G08G 1/162**

(86) International application number:
**PCT/JP2021/018625**

(87) International publication number:
**WO 2022/244063 (24.11.2022 Gazette 2022/47)**

(54) **JUDGEMENT DEVICE, JUDGEMENT METHOD, AND JUDGEMENT PROGRAM**

VORRICHTUNG ZUR BEURTEILUNG, VERFAHREN ZUR BEURTEILUNG UND
BEURTEILUNGSPROGRAMM

DISPOSITIF DE DÉTERMINATION, PROCÉDÉ DE DÉTERMINATION ET PROGRAMME DE
DÉTERMINATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.02.2024 Bulletin 2024/07**

(73) Proprietor: **NTT, Inc.**
**Tokyo 100-8116 (JP)**

(72) Inventors:
• **MORI, Kohei**
**Musashino-shi, Tokyo 180-8585 (JP)**
• **OBANA, Kazuaki**
**Musashino-shi, Tokyo 180-8585 (JP)**

• **HATA, Takahiro**
**Musashino-shi, Tokyo 180-8585 (JP)**
• **YOKOHATA, Yuki**
**Musashino-shi, Tokyo 180-8585 (JP)**
• **HAYASHI, Aki**
**Musashino-shi, Tokyo 180-8585 (JP)**

(74) Representative: **DREISS Patentanwälte PartG
mbB**
**Friedrichstraße 6
70174 Stuttgart (DE)**

(56) References cited:
**CN-A- 111 231 952    JP-A- 2018 206 210
JP-A- 2020 095 512    JP-A- 2020 205 108
JP-A- 2021 041 859    JP-A- H0 743 469**

## Description

Technical Field

The disclosed technology relates to a determination device, a determination method, and a determination program.

Background Art

There are sensors installed in town as information that can be collected and analyzed for vehicles. Typical examples are devices that acquire speed information of a loop coil, an Orbis, or the like, which are mainly used to detect a dangerous driving vehicle that exceeds a speed limit.

JP 2018 206210 A discloses a server device configured to calculate a relative angle between vehicles as targets of a collision course phenomenon using sensing data outputted from a sensor mounted in the vehicle. The issuance of an alert regarding the collision course phenomenon is controlled depending on whether the calculated relative angle changes.

CN 111 231 952 A discloses a vehicle control method for changing a lane. A safety index is calculated based on first driving planning information of a first vehicle and the estimated speed of a second vehicle. If the safety index is below a threshold, the first vehicle is controlled to change lanes.

Citation List

Non Patent Literature

Non Patent Literature 1: "PS Series Loop Coil Type Vehicle Detector Specification Manual", Mirai Giken Co., Ltd. <URL:http://www.hallo-signal.co.jp/support/psrg/pguide_lpcss02_ref.pdf>

Summary of Invention

Technical Problem

However, if the loop coil, the obis, or the like is of a fixed type, only information near the installed position can be collected and thus lacks versatility. Although portable types have appeared in recent years, there remains a problem that only information of the place where the device is carried and installed can be collected in addition to the high cost, and thus it is difficult to cover information of roads all over the country, by which dangerous driving vehicles in non-installed sections cannot be determined.

Further, although it is possible to detect a dangerous driving vehicle using data obtained from the above-described Orbis or the like, it is not common to notify traveling vehicles of information on the detected dangerous driving vehicle. In addition, even if the danger is shared, it is not possible to determine whether the danger does not move from the position where the danger is detected, and which vehicle may be subject to the danger if the danger moves.

The disclosed technology has been made in view of the above points, and an object thereof is to provide a determination device, a determination method, and a determination program capable of determining a dangerous state that can be used in other than a vehicle by using a group of time-series images captured by a camera mounted at the vehicle.

Solution to Problem

A first aspect of the present disclosure is a determination device that determines whether a target object that is capturable from an observation vehicle or the observation vehicle is in a dangerous state, the determination device including an image acquisition unit that acquires a group of time-series images captured by a camera mounted at the observation vehicle, a speed difference estimation unit that estimates a speed difference between the target object and the observation vehicle by using a time-series change in a region representing the target object captured in the group of time-series images, and a determination unit that determines whether the target object or the observation vehicle is in a dangerous state based on the speed difference.

A second aspect of the present disclosure is a determination method in a determination device that determines whether a target object that is capturable from an observation vehicle or the observation vehicle is in a dangerous state, the determination method including acquiring, by an image acquisition unit, a group of time-series images captured by a camera mounted at the observation vehicle, estimating, by a speed difference estimation unit, a speed difference between the target object and the observation vehicle by using a time-series change in a region representing the target object captured in the group of time-series images, and determining, by a determination unit, whether the target object or the observation vehicle is in a dangerous state based on the speed difference.

A third aspect of the present disclosure is a determination program for causing a computer to function as the determination device of the first aspect.

Advantageous Effects of Invention

According to the disclosed technology, it is possible to determine a dangerous state that can be used by other than the vehicle by using a group of time-series images captured by a camera mounted at the vehicle.

Brief Description of Drawings

Fig. 1 is a diagram illustrating an example of an image obtained by capturing a target vehicle as a target object.

Fig. 2(A) is a diagram illustrating an example in which an observation vehicle and a target vehicle are traveling on the same lane, and Fig. 2(B) is a diagram illustrating an example in which a lane on which the observation vehicle is traveling and a lane on which the target vehicle is traveling are separated from each other.

Fig. 3 is a diagram illustrating an example in which the target vehicle is a failed vehicle or an on-road parked vehicle.

Fig. 4 is a diagram for describing that a vector length of an optical flow differs depending on a part of a target vehicle.

Fig. 5 is a diagram illustrating an example of detecting a vehicle violating a speed limit.

Fig. 6 is a diagram illustrating an example of detecting a stopped vehicle.

Fig. 7 is a diagram illustrating an example of a group of time-series images obtained by capturing an image of the target vehicle having a speed higher than that of an observation vehicle.

Fig. 8 is a diagram illustrating a state of gradually moving away from a reference distance to the target vehicle at a reference position.

Fig. 9 is a graph illustrating a relationship between a distance to the target vehicle and a ratio of an area of a region representing the target vehicle.

Fig. 10 is a diagram for describing a distance to the target vehicle at the reference position.

Fig. 11 is a diagram for describing target vehicles having respective distances as a distance from the observation vehicle.

Fig. 12 is a diagram illustrating an example of a pattern representing a time-series change in the ratio of the area of the region representing the target vehicle for each speed difference.

Fig. 13 is a diagram for describing a method of determining whether or not a speed difference from a target vehicle is equal to or more than a threshold.

Fig. 14 is a diagram for describing a method of determining whether or not a speed difference from a target vehicle is equal to or more than a threshold for each degree of a dangerous state.

Fig. 15 is a diagram illustrating a configuration of a determination device according to the first embodiment.

Fig. 16 is a schematic block diagram of an example of a computer that functions as the determination device according to the first embodiment.

Fig. 17 is a block diagram illustrating a configuration of the determination device of the first embodiment.

Fig. 18 is a block diagram illustrating a configuration of a speed difference estimation unit of the determination device of the first embodiment.

Fig. 19 is a diagram for describing a method of tracking a region representing a target vehicle.

Fig. 20 is a flowchart illustrating a determination processing routine of the determination device of the first embodiment.

Fig. 21 is a block diagram illustrating a configuration of a speed difference estimation unit of a determination device according to a second embodiment.

Fig. 22 is a flowchart illustrating a determination processing routine of the determination device of the second embodiment.

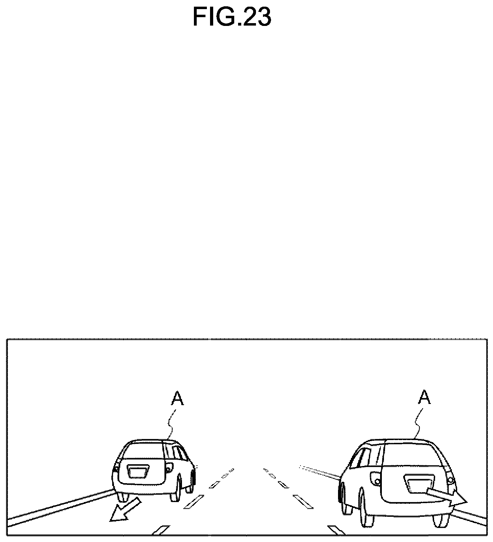

Fig. 23 is a diagram illustrating an example of an image obtained by capturing an image of the target vehicle that is slower in speed than the observation vehicle.

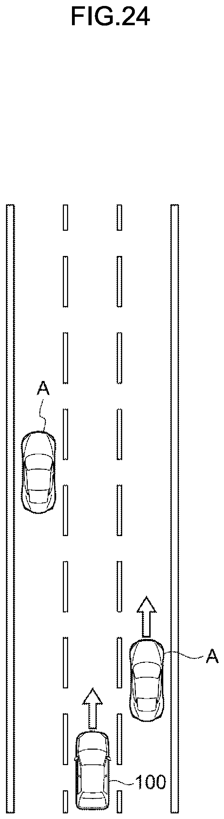

Fig. 24 is a diagram illustrating a situation in which the speed of the target vehicle is slower than that of the observation vehicle.

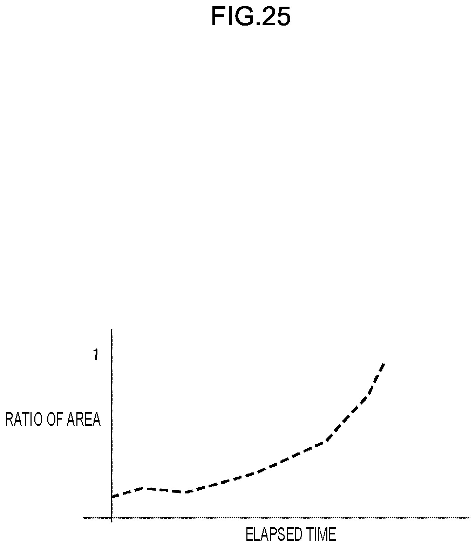

Fig. 25 is a diagram illustrating an example of a pattern representing a time-series change in a ratio of an area of a region representing the target vehicle.

Description of Embodiments

Hereinafter, an example of an embodiment of the disclosed technology will be described with reference to the drawings. Note that, in the drawings, the same or equivalent components and portions are denoted by the same reference signs. Further, dimensional ratios in the drawings are exaggerated for convenience of description, and may be different from actual ratios.

<Outline of present embodiment>

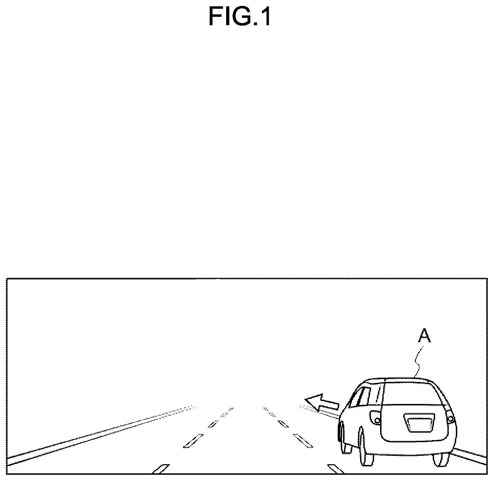

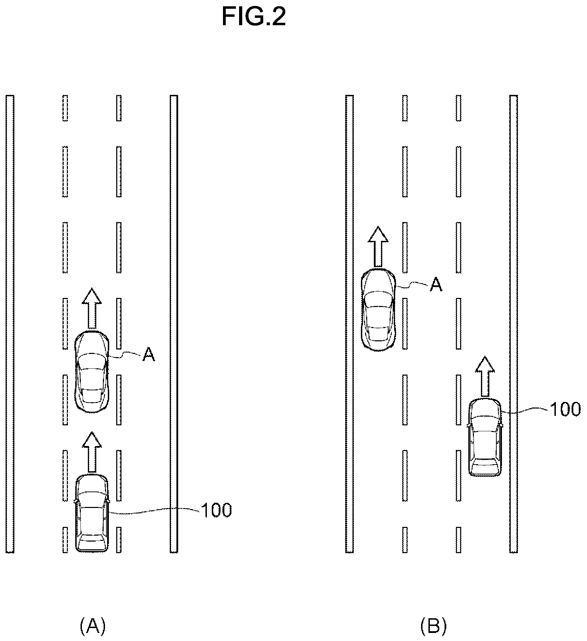

In the present embodiment, the speed difference between an observation vehicle and a target object is estimated from a time-series change in a region representing the target object appearing in an image captured by a camera mounted at the observation vehicle. In the present embodiment, as illustrated in Figs. 1 and 2, a case where the target object is a target vehicle A and the speed of the target vehicle A is higher than that of an observation vehicle 100 will be described as an example. Fig. 1 illustrates an example of an image representing the target vehicle A traveling in an adjacent lane. Fig. 2(A) illustrates an example in which the speed of the target vehicle A traveling in the same lane as the observation vehicle 100 is higher than that of the observation vehicle 100. In addition, Fig. 2(B) illustrates an example in which the speed of the target vehicle A traveling in a lane away from the traveling lane of the observation vehicle 100 is higher than that of the observation vehicle 100.

Conventionally, an installation type sensor that is a speed measuring instrument such as a loop coil, an Orbis, and an H system is used for a crackdown on vehicles that violate a speed limit.

In recent years, portable sensors are also used, but since they are expensive and lack flexible in terms of being transported to a place where collection is desired and installed, installation of portable sensors on roads all over the country has not been achieved.

In addition, time and money are needed to implement sensors in automobiles and infrastructures so as to make it possible to cover information on roads all over the country. Thus, there is a demand for a technique for efficiently collecting information on other automobiles and the like using sensors (including cameras) already mounted at some automobiles.

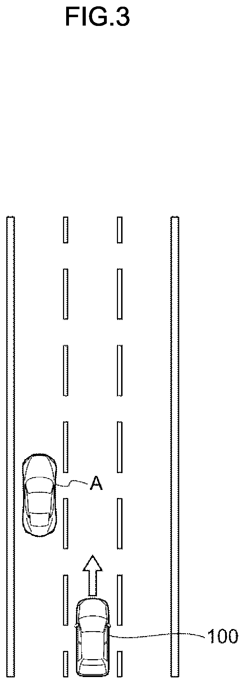

In addition, as illustrated in Fig. 3, there is also a problem caused by the target vehicle A stopped on the road, which is a vehicle parked on the street or a vehicle involved in an accident. Even if the target vehicle A is a connected car, there is a case where the engine is turned off, and the position information cannot be collected. Thus, it is necessary to detect and recognize the target vehicle A from the outside in order to inform the surroundings of the target vehicle A.

In addition, for commercial vehicles, systems for evaluating the presence or absence of dangerous driving (distracted driving, driving while doing something else, aggressive driving, exceeding speed, sudden start, sudden braking, and the like) by incorporating an in-vehicle camera, a sensor, and a monitoring mechanism using controller area network (CAN) data have also become widespread.

However, it is unlikely that this system is employed for general vehicles (non-commercial vehicles) because of the lack of merits and the cost incurred, and thus external detection and recognition is still necessary.

Conventionally, as a method for estimating a speed difference between an observation vehicle and a target object, there is a method in which the distance to a target object is obtained by a millimeter wave radar mounted at the observation vehicle, and the speed difference is measured from a time-series change thereof, or a method in which feature points and optical flows thereof are calculated from an image captured by a camera mounted at the observation vehicle, and movement amounts and relative speeds of surrounding vehicles are obtained from vector amounts thereof, and these methods are mainly used for approach warning and collision avoidance.

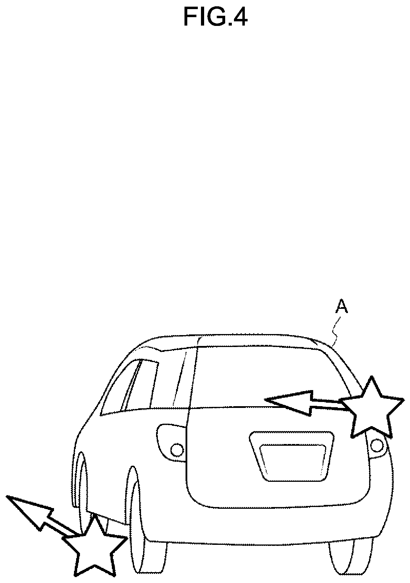

However, the optical flows are also detected with respect to the surrounding background when the observation vehicle is also traveling, and thus it is necessary to separately specify the region of the target object in the video. Further, there is a possibility that the same part of the same vehicle cannot be tracked. For example, a vector may be drawn from a tire of one vehicle to a tire of another vehicle. In addition, since it is not clear which part of the vehicle the feature point for calculating the optical flow is, an error may occur. For example, as illustrated in Fig. 4, even in a case of an optical flow related to the same vehicle, there is a difference in vector length depending on which of two points the optical flow is. Fig. 4 illustrates an example in which the vector of the optical flow of a front wheel portion of the target vehicle A is shorter than the vector of the optical flow of a back surface portion of the target vehicle.

Accordingly, in the present embodiment, the speed difference between the target vehicle and the observation vehicle and the speed of the target vehicle are accurately estimated using a group of time-series images captured by a camera mounted at the observation vehicle. Estimation results of the speed difference between the target vehicle and the observation vehicle and the speed of the target vehicle may be used for information sharing with, for example, a company that provides congestion information such as Japan Road Traffic Information Center, the police, and surrounding vehicles.

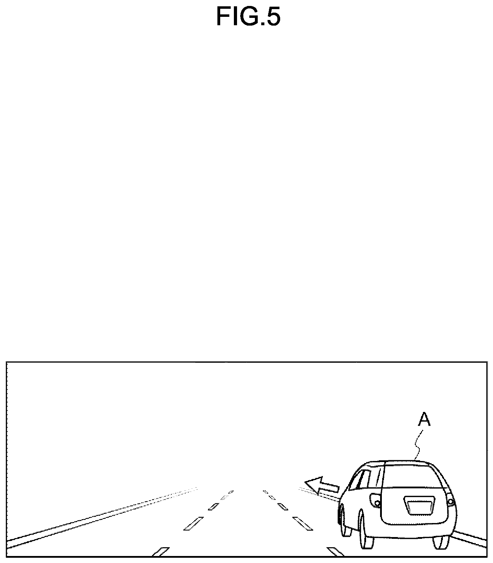

For example, the estimation result of the speed difference between the target vehicle and the observation vehicle is used to detect a vehicle that violates the speed limit. **In** a case where it is estimated that the speed difference between the target vehicle A and the observation vehicle is +50 km/h or more as illustrated in Fig. 5 when the observation vehicle is traveling at 100 km/h on an expressway with a speed limit of 100 km/h, an image is attached to notify the police that the target vehicle A is a vehicle traveling at 150 km/h in violation of the speed limit.

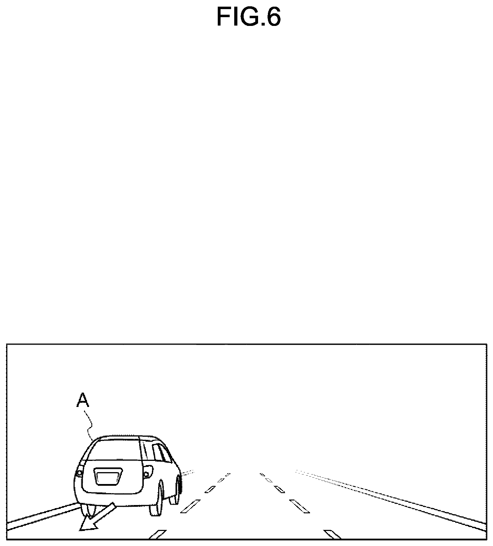

Further, the estimation result of the speed difference between the target vehicle and the observation vehicle is used for detecting a stopped vehicle which is a failed vehicle or a vehicle parked on the street. In a case where it is estimated that, when the observation vehicle is traveling on a general road at 30 km/h, as illustrated in Fig. 6, the speed difference between the target vehicle A and the observation vehicle is -30 km/h, and it is confirmed from the position information that there is no feature that causes a stop such as a signal and a facility around the target vehicle A, information that the target vehicle A is a stopped vehicle having a traveling speed of 0 km/h is shared with a following vehicle. As the following vehicle to share with, a configuration may be employed to notify only a vehicle traveling on the roadway on which the stopped vehicle is present after the time when the danger of the stopped vehicle or the like is detected. For example, a notification may be given to a vehicle existing between the position where the stopped vehicle exists and a closest intersection, or a notification may be given to a vehicle scheduled to travel on the roadway where the stopped vehicle exists with reference to navigation information. In addition, the information may be transmitted to a service provider that provides a map, a dynamic map, or a navigation service that aggregates and distributes road information.

Next, a principle of estimating the speed difference between the target vehicle and the observation vehicle will be described. Here, a case where the target vehicle is faster than the observation vehicle will be described as an example.

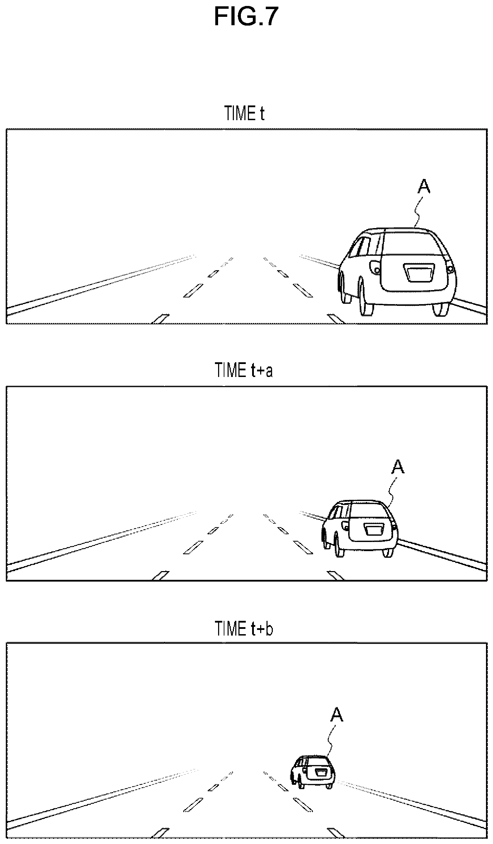

As illustrated in Fig. 7, as the target vehicle A moves away at time t, time t + a, and time t + b, the size of the region representing the target vehicle A in the image decreases. At this time, as the speed difference between the target vehicle A and the observation vehicle is larger, the size of the region representing the target vehicle A is faster and smaller. Therefore, the speed difference between the target vehicle A and the observation vehicle can be obtained from the amount of change in the size of the region representing the target vehicle A and the speed at which the region decreases. In addition, when the absolute speed of the target vehicle A is obtained, it is only required to add the speed of the observation vehicle.

Further, in a case where a camera (of a general monocular camera) mounted at the observation vehicle is used, a target object such as another vehicle or a building is represented on an image so as to converge to a vanishing point.

The size of the region representing the target object appearing at that time can be approximated as in a one-point perspective view, and changes according to a law with respect to the distance from a point to be a reference. For example, when the distance from the camera is doubled, the length of a side of a region representing a front portion of the target object becomes 1/2, and when the distance from the camera is tripled, the length of the side of the region representing the front portion of the target object becomes 1/3.

Further, when the distance from the camera is doubled, the area of the region representing the front portion of the target object becomes 1/4, and when the distance from the camera is tripled, the area of the region representing the front portion of the target object becomes 1/9.

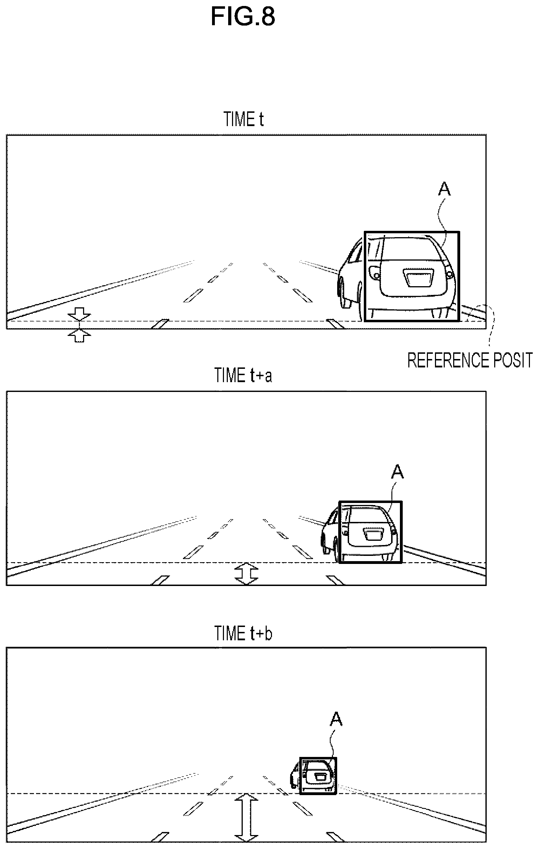

Further, as illustrated in Fig. 8, the region representing the target vehicle A detected at time t is set as the region representing the target vehicle A at the reference position in an image vertical direction, and the area of the region representing the back surface portion of the target vehicle A is set to 1.0. The distance between the target vehicle A and the observation vehicle at this time is defined as a reference distance d(m).

For the target vehicle A detected at time t + a, the area of the region representing the back surface portion is 1/4 times as compared to that at time t, and the length of the side of the region representing the back surface portion is 1/2 as compared to that at time t.

At this time, a distance D between the target vehicle A and the observation vehicle has changed to 2d(m).

In addition, the area of the region representing the back surface portion of the target vehicle A detected at time t + b is 1/9 times as compared to that at time t, and the length of the side of the region representing the back surface portion is 1/3 as compared to that at time t.

At this time, the distance D between the target vehicle A and the observation vehicle has changed to 3d(m).

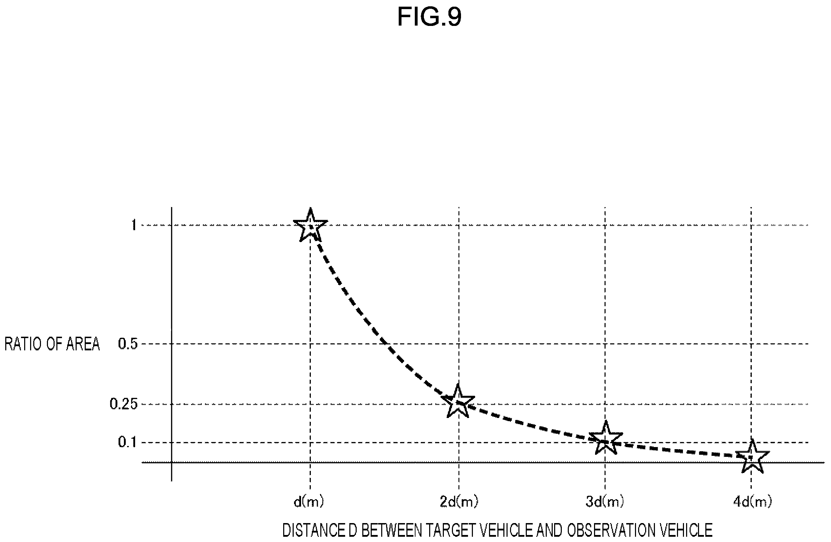

Fig. 9 illustrates the relationship between the area of the region representing the back surface portion of the target vehicle A described above and the distance D to the target vehicle A as a graph. Assuming that a lateral direction of the observation vehicle A is the X axis and a height direction of the observation vehicle A is the Z axis, a ratio between an area of a region that is horizontal to an X-Z plane and represents the back surface portion of the target vehicle A and an area of the region that represents the back surface portion of the target vehicle A at the reference position has a relationship of changing according to the distance between the target vehicle A and the observation vehicle as illustrated in Fig. 9.

A relational expression of the ratio between the length of the side of the region representing the back surface portion of the target vehicle and the length of the side of the region representing the back surface portion of the target vehicle at the reference position, the distance D to the target vehicle, and the reference distance d is expressed by the following expression (1).

$$\text{Ration of length} = \cfrac{1}{\left(\cfrac{\text{Distance D}}{d}\right)}$$

(1)

A relational expression of the ratio between the area of the region representing the back surface portion of the target vehicle and the area of the region representing the back surface portion of the target vehicle at the reference position, the distance D to the target vehicle, and the reference distance d is expressed by the following expression (2).

$$\text{Ration of area} = \cfrac{1}{\left(\cfrac{\text{Distance D}}{d}\right)^2}$$

(2)

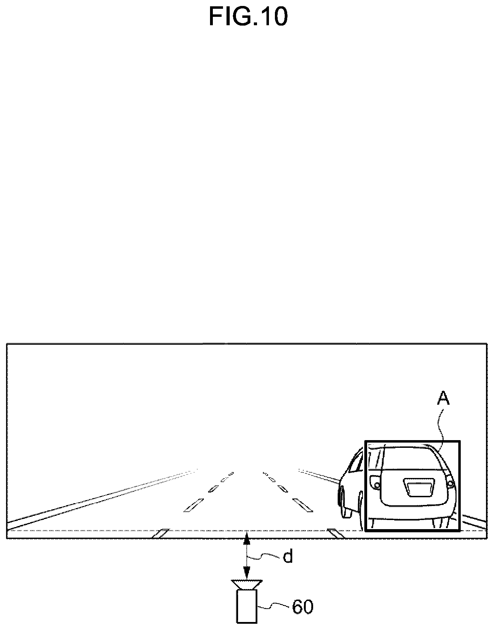

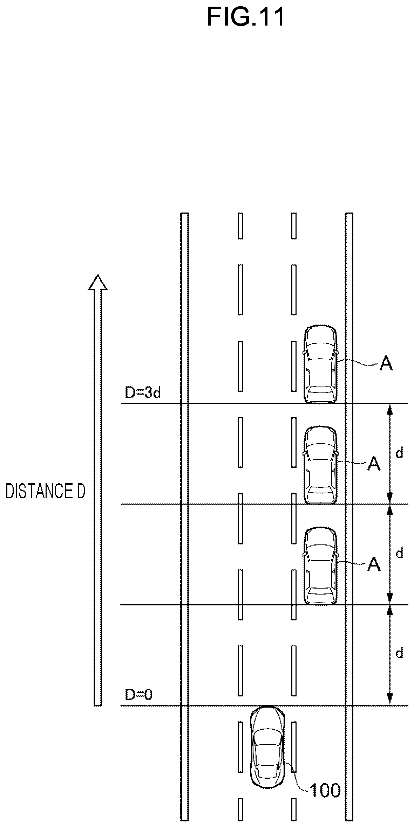

Here, the reference distance d is a distance from an installation position of a camera 60, which will be described later, mounted at the observation vehicle 100, instead of a lower part of the image (see Fig. 10). A top view is as illustrated in Fig. 11. In Fig. 11, it is assumed that the camera 60 is mounted at the leading end of the observation vehicle 100, and the distance D (= reference distance d) in which the ratio of the area of the region representing the back surface portion of the target vehicle A is 1.0, the distance D (= 2d) in which the ratio of the area is 1/4, and the distance D (= 3d) in which the ratio of the area is 1/9 are illustrated.

Here, as illustrated in Fig. 9, when the horizontal axis represents the distance D to the target vehicle A, the same graph is obtained regardless of the speed difference. Further, when the reference distance d is included in the expression as in the above relational expression, it is necessary to calculate the reference distance d in order to calculate the speed difference using the relational expression.

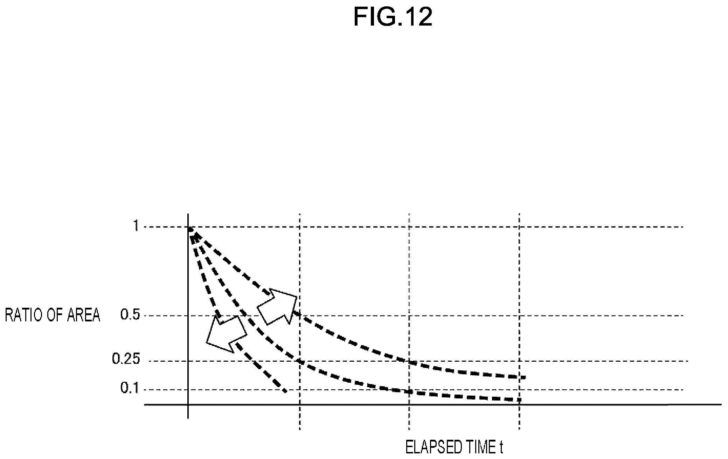

Accordingly, in the present embodiment, as illustrated in Fig. 12, the influence of the speed difference is visualized by setting the horizontal axis as the time axis. Similarly, the graph of Fig. 12 is a graph in which the ratio of the area changes with time. Further, the larger the speed difference, the faster the convergence, and the smaller the speed difference, the longer the convergence takes.

Thus, the speed difference can be estimated only by the tendency at the early stage of the rapid change.

In the present embodiment, the speed difference between the target vehicle and the observation vehicle is estimated as described above, and the dangerous state of the target vehicle is determined.

For example, in a case of an expressway with a speed limit of 80 km/h, a rule that the target vehicle traveling at 110 km/h is in a dangerous state is defined. That is, the speed difference of +30 km/h is used as a determination threshold for determining whether or not the vehicle is in a dangerous state.

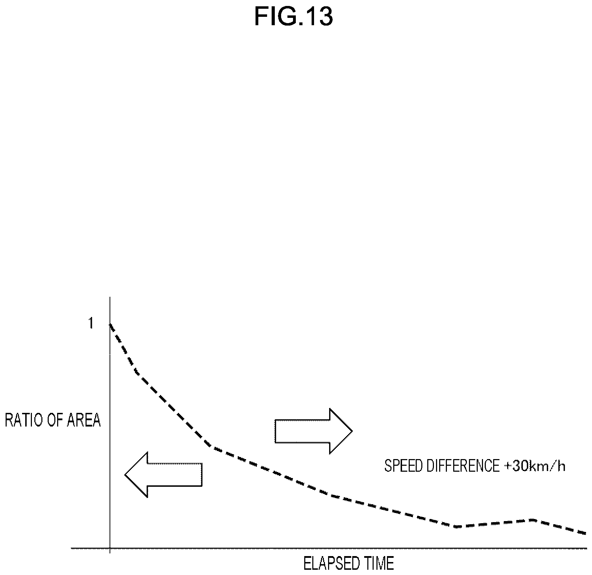

Alternatively, as illustrated in Fig. 13, a time-series change in the ratio of the area when the speed difference is +30 km/h is obtained as a pattern, and if the ratio attenuates faster than this pattern, it is determined that the target vehicle is in a dangerous state, and the information is shared with the police and surrounding vehicles.

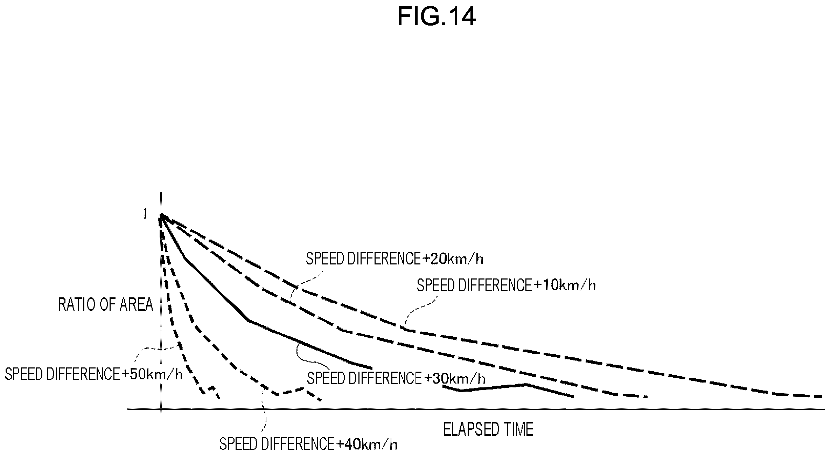

In addition, as illustrated in Fig. 14, the degree of the dangerous state may be finely divided by obtaining a pattern for each speed difference at an interval of 10 km/h and determining which pattern is closest. Fig. 14 illustrates an example in which a pattern representing a time-series change in the area ratio is obtained for each of the speed differences +10 km/h, +20 km/h, +30 km/h, +40 km/h, and +50 km/h.

In addition, a distance (hereinafter referred to as a height) between the position where the camera 60 is installed and the road may be considered. For example, in a case where a lower end of the image is Y = 0, the higher the height is, the lower the coordinates on the image to be unified in the image vertical direction should be set to. The height of the camera 60 may be acquired using an altitude sensor, may be determined for each vehicle type on which the camera is mounted, or may be input in advance when the camera 60 is installed. Note that, in a case where an upper left part of the image is set as the origin, the higher the height is, the higher the coordinates on the image to be unified in the image vertical direction should be set to.

In addition, an orientation in which the camera 60 is installed (hereinafter, it is described as orientation) may be considered. For example, in a case where a roll angle of the camera 60 is not horizontal with respect to the road, the acquired image may be rotated left and right and then used. The orientation may be acquired using an acceleration sensor or a gyro center, or may be obtained from an acquired image.

In addition, in a case where a pitch angle of the camera 60 is directed upward or downward instead of the front, it is sufficient if the coordinates on the image to be unified in the image vertical direction are moved up or down. For example, in a case where the camera 60 faces downward, it is sufficient if the coordinates are shifted to higher values on the vertical axis.

Further, in the present embodiment, the following two are introduced into the processing.

First, the calculation of the size of the region representing the back surface portion of the target vehicle is started after the entire back surface portion of the target vehicle has completely fit in the image. Specifically, when it is determined that the region representing the back surface portion of the target vehicle detected from the image is away from the edge of the image by a certain amount, the calculation of the size of the region representing the back surface portion of the target vehicle is started.

Second, timings at which the ratio of the area of the region representing the back surface portion of the target vehicle is set to 1.0 are unified in the image vertical direction. This is to consider a case where the region representing the back surface portion of the target vehicle is missing due to the front of the observation vehicle, and to unify the reference distance d.

Further, in the present embodiment, a speed difference between the target vehicle and the observation vehicle is obtained in order to determine whether the target vehicle is in a dangerous state, not in order to determine whether the target vehicle is approaching or moving away.

[First Embodiment]

<Configuration of determination device according to first embodiment>

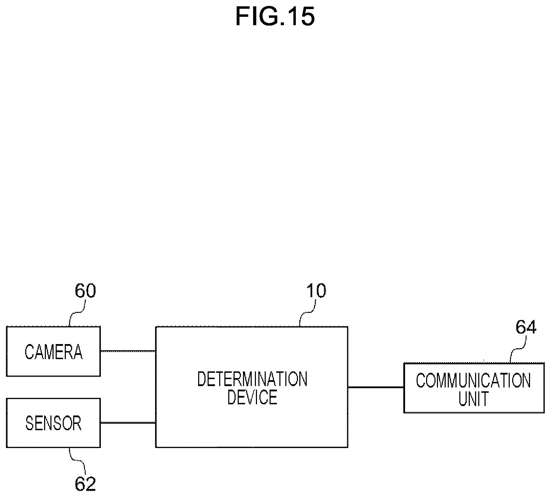

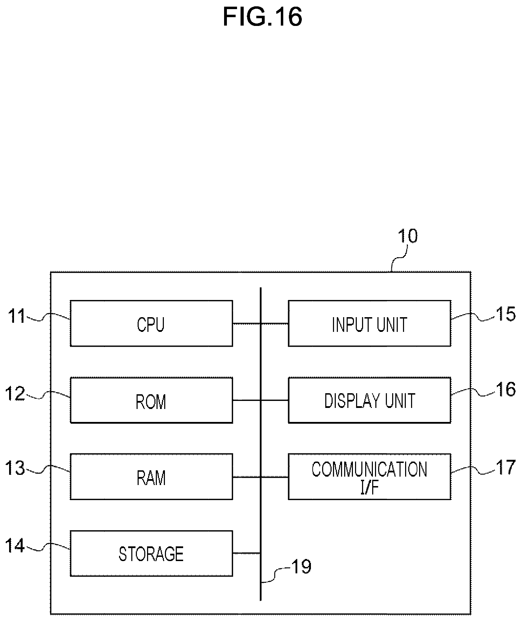

Figs. 15 and 16 are block diagrams illustrating a hardware configuration of a determination device 10 according to the present embodiment.

As illustrated in Fig. 15, the camera 60, a sensor 62, and a communication unit 64 are connected to the determination device 10. The camera 60 is mounted at the observation vehicle 100, captures a group of time-series images representing the front of the observation vehicle 100, and outputs the group of time-series images to the determination device 10. The sensor 62 detects CAN data including the speed of the observation vehicle 100, and outputs the CAN data to determination device 10. The communication unit 64 transmits a determination result by the determination device 10 to a surrounding vehicle or a server of a company via the network.

Note that a case where the determination device 10 is mounted at the observation vehicle 100 will be described as an example, but the present invention is not limited thereto. An external device capable of communicating with the observation vehicle 100 may be configured as the determination device 10.

As illustrated in Fig. 16, the determination device 10 includes a central processing unit (CPU) 11, a read only memory (ROM) 12, a random access memory (RAM) 13, a storage 14, an input unit 15, a display unit 16, and a communication interface (I/F) 17. The configurations are communicably connected to each other via a bus 19.

The CPU 11 is a central processing unit, and executes various programs and controls each unit. That is, the CPU 11 reads a program from the ROM 12 or the storage 14 and executes the program by using the RAM 13 as a work area. The CPU 11 controls each component described above and performs various types of calculation processing according to the programs stored in the ROM 12 or the storage 14. In the present embodiment, the ROM 12 or the storage 14 stores a determination program for determining a dangerous state of the target vehicle A. The determination program may be one program or a group of programs including a plurality of programs or modules.

The ROM 12 stores various programs and various types of data. The RAM 13 temporarily stores the programs or data as a work area. The storage 14 includes a hard disk drive (HDD) or a solid state drive (SSD) and stores various programs including an operating system and various types of data.

The input unit 15 is used to perform various inputs including a group of time-series images captured by the camera 60 and CAN data detected by the sensor 62. For example, a group of time-series images including the target vehicle A present in front of the observation vehicle 100 and captured by the camera 60 and CAN data including the speed of the observation vehicle 100 detected by the sensor 62 are input to the input unit 15.

Each image of the group of time-series images is an RGB or grayscale image without distortion caused by a camera structure such as a lens or a shutter or with the distortion corrected.

The display unit 16 is, for example, a liquid crystal display, and displays various types of information including the determination result of the dangerous state of the target vehicle A. The display unit 16 may function as the input unit 15 by employing a touchscreen system.

The communication interface 17 is an interface for communicating with another device via the communication unit 64, and for example, standards such as Ethernet (registered trademark), FDDI, and Wi-Fi (registered trademark) are used.

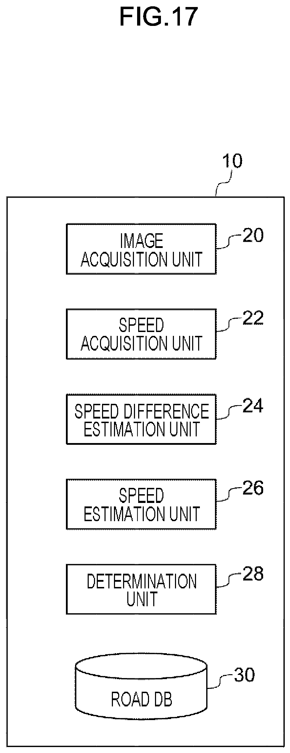

Next, a functional configuration of the determination device 10 will be described. Fig. 17 is a block diagram illustrating an example of a functional configuration of the determination device 10.

As illustrated in Fig. 17, the determination device 10 functionally includes an image acquisition unit 20, a speed acquisition unit 22, a speed difference estimation unit 24, a speed estimation unit 26, a determination unit 28, and a road database 30.

The image acquisition unit 20 acquires the group of time-series images received by the input unit 15.

The speed acquisition unit 22 acquires the speed of the observation vehicle 100 when the group of time-series images is captured, which is received by the input unit 15.

The speed difference estimation unit 24 estimates the speed difference between the target vehicle A and the observation vehicle 100 using the time-series change in the region representing the target vehicle A captured in the group of time-series images.

Specifically, for each time, the speed difference estimation unit 24 calculates a ratio between the size of the region representing the target vehicle A at the reference position and the size of the region representing the target vehicle A at the time, and compares a pattern representing a time-series change of the ratio with a pattern representing a time-series change of a ratio obtained in advance for each speed difference to estimate the speed difference between the target vehicle A and the observation vehicle 100.

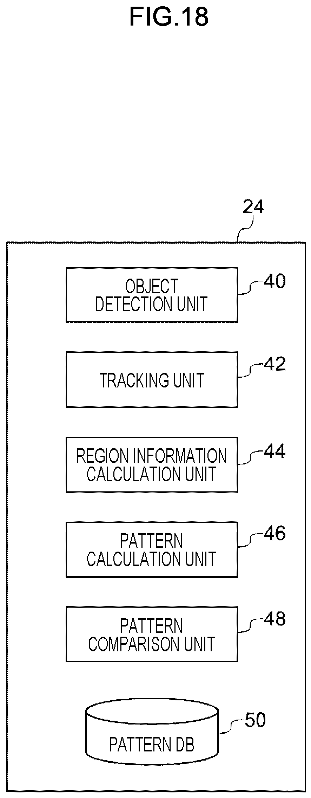

As illustrated in Fig. 18, the speed difference estimation unit 24 includes an object detection unit 40, a tracking unit 42, a region information calculation unit 44, a pattern calculation unit 46, a pattern comparison unit 48, and a pattern database 50.

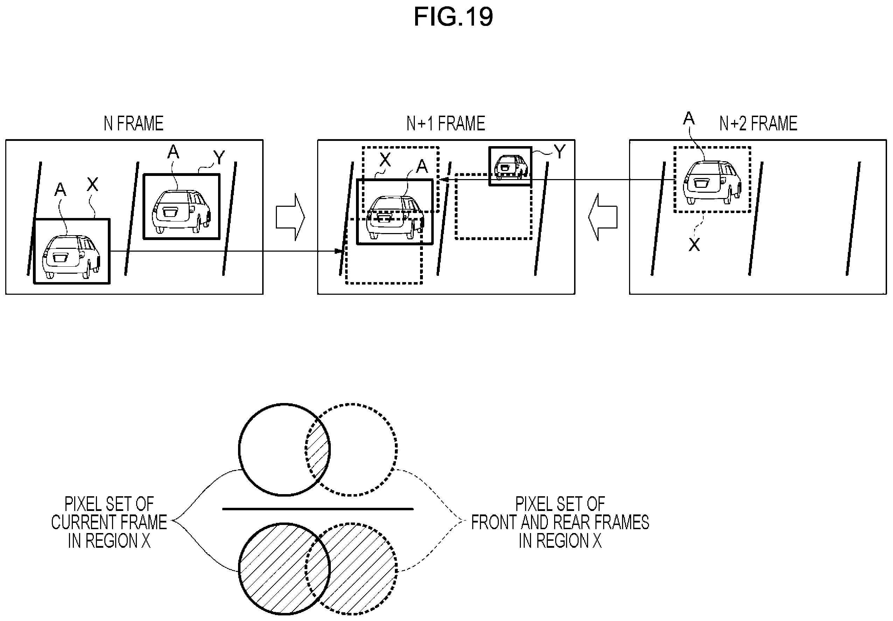

The object detection unit 40 detects a region representing the target vehicle A that is capturable from the observation vehicle 100 from each image of the group of time-series images. Specifically, by using an object detection means such as an object detection algorithm YOLOv3 to perform object detection in a classification including a car, a truck, and a bus, the region representing the target vehicle A is detected, and as illustrated in Fig. 19, numbering is performed on the detected region. Fig. 19 illustrates an example in which regions X and Y representing the target vehicle A are detected in N frames, regions X and Y representing the target vehicle A are detected in N + 1 frames, and a region X representing the target vehicle A is detected in N + 2 frames.

The tracking unit 42 tracks a region representing the target vehicle A on the basis of a detection result by the object detection unit 40. Specifically, as illustrated in Fig. 19, in comparison with regions detected in preceding and succeeding frames, among regions detected in the current frame, a region having a large number of pixels overlapping the regions detected in the preceding and succeeding frames is estimated as a region representing the same target vehicle, and the region representing each target vehicle A is tracked by repeatedly performing the estimation. The right side of Fig. 19 illustrates an example of calculating, with respect to the region X of the N + 1 frame, a value obtained by dividing the number of pixels of a product set of pixels in the region X overlapping in comparison with the N frame and the N + 2 frame by the number of pixels of a sum set of pixels in the region X overlapping with the N frame and the N + 2 frame. The region X in which this value is the highest is determined to represent the same target vehicle A as the regions X of the overlapping preceding and succeeding frames, and the region representing the target vehicle A is tracked.

The region information calculation unit 44 calculates the size of the region representing the tracked target vehicle A for each time. At this time, the region information calculation unit 44 calculates, for each time, the size of the region representing the tracked target vehicle A from the timing when the region representing the target vehicle A is separated from an end of the image. For example, the length or area of the side is calculated as the size of the region representing the tracked target vehicle A. In the present embodiment, a case where the area of the region representing the target vehicle A is calculated will be described as an example.

For the tracked target vehicle A, the pattern calculation unit 46 calculates a pattern representing a time-series change in the ratio between the size of the region representing the target vehicle A at the reference position and the size of the region representing the target vehicle A at each time. Specifically, the pattern calculation unit 46 uses the size of the region representing the target vehicle A detected at the reference position in the image vertical direction as the size of the region representing the target vehicle A at the reference position, and calculates a pattern representing a time-series change in a ratio of the size of the region representing the tracked target vehicle A to the size of the region representing the target vehicle A at the reference position.

The pattern comparison unit 48 compares the pattern calculated by the pattern calculation unit 46 with the pattern representing a time-series change in a ratio of the size of the region representing the target vehicle A stored in the pattern database 50 for each speed difference to the size of the region representing the target vehicle A at the reference position, and estimates the speed difference corresponding to the most similar pattern as the speed difference between the target vehicle A and the observation vehicle 100.

The pattern database 50 stores, for each speed difference, the pattern representing a time-series change in the ratio of the size of the region representing the target vehicle A of the speed difference to the size of the region representing the target vehicle A at the reference position (see Fig. 14).

The speed estimation unit 26 estimates the speed of the target vehicle A from the acquired speed of the observation vehicle 100 and the estimated speed difference.

The determination unit 28 determines whether the target vehicle A is in a dangerous state by using the speed difference from the target vehicle A or the speed of the target vehicle A.

For example, the determination unit 28 determines that the target vehicle A is in the dangerous state when the speed of the target vehicle A is equal to or more than a threshold. Here, as an example, the threshold is a speed faster than the speed limit by a predetermined speed.

Further, the determination unit 28 determines that the target vehicle A is in the dangerous state when it is determined that there is no passing lane on the basis of lane information acquired from the road database 30 and when the speed difference between the target vehicle A and the observation vehicle 100 is equal to or more than the threshold.

The road database 30 stores the lane information of each point of the road.

<Operation of determination device according to first embodiment>

Next, actions of the determination device 10 will be described.

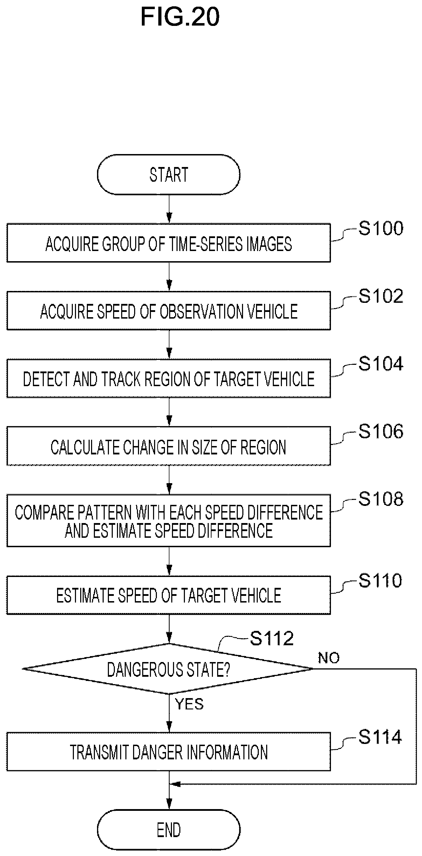

Fig. 20 is a flowchart illustrating a flow of determination processing by the determination device 10. The determination processing is performed by the CPU 11 reading the determination program from the ROM 12 or the storage 14, and loading and executing the determination program in the RAM 13. Further, the group of time-series images captured by the camera 60 and CAN data detected by the sensor 62 when the group of time-series images is captured are input to the determination device 10.

In step S100, the CPU 11, as the image acquisition unit 20, acquires the group of time-series images received by the input unit 15.

In step S102, the CPU 11, as the speed acquisition unit 22, acquires the speed of the observation vehicle 100 when the group of time-series images is captured from the CAN data received by the input unit 15.

In step S104, the CPU 11, as the object detection unit 40, detects the region representing the target vehicle A from each image of the group of time-series images. Then, the CPU 11, as the tracking unit 42, tracks the region representing the target vehicle A on the basis of the detection result by the object detection unit 40.

In step S106, the CPU 11, as the region information calculation unit 44, calculates the size of the region representing the tracked target vehicle A at each time. Then, the CPU 11, as the pattern calculation unit 46, calculates a pattern representing the time-series change in the ratio of the size of the region at the reference position of the tracked target vehicle A to the size of the region representing the target vehicle A.

In step S108, the CPU 11, as the pattern comparison unit 48, compares the pattern calculated by the pattern calculation unit 46 with the pattern representing the time-series change in the ratio of the size of the region representing the target vehicle A stored for each speed difference in the pattern database 50 to the size of the region representing the target vehicle A at the reference position, and estimates the speed difference corresponding to the most similar pattern as the speed difference between the target vehicle A and the observation vehicle 100.

In step S110, the CPU 11, as the speed estimation unit 26, estimates the speed of the target vehicle A from the acquired speed of the observation vehicle 100 and the estimated speed difference.

In step S112, the CPU 11, as the determination unit 28, determines whether the target vehicle A is in a dangerous state by using the speed difference between the target vehicle A and the observation vehicle 100 or the speed of the target vehicle A. When it is determined that the target vehicle A is in a dangerous state, the process proceeds to step S114, and on the other hand, when it is determined that the target vehicle A is not in the dangerous state, the determination process ends.

In step S114, the communication unit 64 transmits danger information indicating the determination result by the determination device 10 to a surrounding vehicle or a server of a company via the network. Further, the display unit 16 displays the danger information including the determination result of the dangerous state of the target vehicle A, and ends the determination processing.

As described above, the determination device according to the present embodiment estimates the speed difference between the target vehicle and the observation vehicle using the time-series change in the region representing the target vehicle captured in the group of time-series images, and determines whether the target vehicle is in the dangerous state on the basis of the speed difference. This, it is possible to determine the dangerous state that can be used by other than the observation vehicle by using the group of time-series images captured by the camera mounted at the observation vehicle.

Further, in comparison with Reference Literature 1, the determination device according to the present embodiment can estimate the speed of the target vehicle by considering the speed of the observation vehicle, and can estimate whether the target vehicle is stopped or moving. For example, it is possible to cope with that a change in the size of the region representing the target vehicle approaching in the opposite lane is different between a case where the observation vehicle is stopped and a case where the observation vehicle is traveling at 80 km/h. Furthermore, it is possible to cope with a case where the target vehicle is stopped and the observation vehicle is approaching.

[Reference Literature 1]: NTT Communications Corporation, "Successful automatic detection of dangerous driving utilizing artificial intelligence (AI)",<URL:https://www.ntt.com/about-us/press-releases/news/article/2016/20160926_2.html>, September 26, 2016

Further, in Non Patent Literature 1 described above, the movement of the background is not considered. In particular, since the optical flow is used, it is difficult to distinguish a target vehicle in which a vector is drawn in the same direction from a road surface or a street tree because the background also moves when the observation vehicle is moving, and a flag fluttering or trees swaying due to a strong wind are detected as the target vehicle. Therefore, it is necessary to separately specify a region representing the target vehicle and perform statistical processing of a vector. However, since the vector of the target vehicle that overtakes the observation vehicle is in the opposite direction to the background, the target vehicle can be clearly extracted using the optical flow. On the other hand, in the present embodiment, the calculation amount can be reduced by tracking the region representing the target vehicle between the frames and estimating the speed difference between the target vehicle and the observation vehicle by using the time-series change in the region representing the target vehicle.

Note that, in the above embodiment, the description has been given, as an example, of the case where the speed difference between the target vehicle and the observation vehicle is estimated by comparing the patterns representing the time-series change in the ratio of the size of the region representing the target vehicle to the size of the region representing the target vehicle at the reference position, but the present invention is not limited thereto. An approximate expression approximating a pattern representing a time-series change in the ratio of the size of the region representing the target vehicle to the size of the region representing the target vehicle at the reference position may be calculated, and the approximate expressions may be compared with each other to estimate the speed difference between the target vehicle and the observation vehicle. In this case, first, for each time, it is sufficient if the ratio of the size of the region representing the target vehicle to the size of the region representing the target vehicle at the reference position is calculated, a point group having coordinates with the horizontal axis representing time and the vertical axis representing the size ratio is calculated ([t1, x1], [t2, x2], [t3, x3]...), and an approximate expression corresponding to the point group is calculated. At this time, it is only required to determine the order of the approximate expression according to whether the size of the region is the length of the side or the area of the region.

In addition, for each vehicle type such as a car, a truck, a bus, or a trailer, a pattern representing a time-series change in the ratio of the size of the region representing the target vehicle to the size of the region representing the target vehicle at the reference position may be prepared. In addition, a pattern representing a time-series change of the ratio may be prepared for each vehicle name. In this case, the object detection unit is only required to detect a region representing the target vehicle A from each image of the group of time-series images, and identify a vehicle type and a vehicle name of the target vehicle A.

In addition, the speed difference between the target vehicle and the observation vehicle may be estimated in consideration of how many lanes the target vehicle is away from and which of a front surface portion and the back surface portion of the target vehicle appears in the image.

[Second embodiment]

Next, a determination device of a second embodiment will be described. Note that portions having configurations similar to those of the first embodiment are denoted by the same reference numerals, and description thereof is omitted.

The second embodiment is different from the first embodiment in that a distance to a target vehicle is estimated using a relational expression represented using the ratio of a size of a region representing the target vehicle to a size of a region representing the target vehicle at a reference position, a reference distance to the target vehicle at the reference position, and a distance to the target vehicle, and a speed difference is estimated from a change in the estimated distance.

<Configuration of determination device according to second embodiment>

Next, the determination device 10 of the second embodiment includes the image acquisition unit 20, the speed acquisition unit 22, a speed difference estimation unit 224, the speed estimation unit 26, the determination unit 28, and the road database 30.

For each time, the speed difference estimation unit 224 calculates the distance to the target vehicle A at the time using the reference distance to the target vehicle A at the reference position obtained in advance for the type of the target vehicle A, the size of the region representing the target vehicle A at the reference position obtained in advance for the type of the target vehicle A, and the size of the region representing the target vehicle A at the time, and estimates the speed difference between the target vehicle A and the observation vehicle 100 from the time-series change in the distance.

Specifically, for each time, the speed difference estimation unit 224 calculates the distance to the target vehicle A at the time by using a relational expression represented using the reference distance to the target vehicle A at the reference position, the ratio of the size of the region representing the target vehicle A at the time to the size of the region representing the target vehicle A at the reference position, and the distance to the target vehicle A at the time. Then, the speed difference estimation unit 224 estimates the speed difference between the target vehicle A and the observation vehicle 100 on the basis of the time-series change in the distance to the target vehicle A.

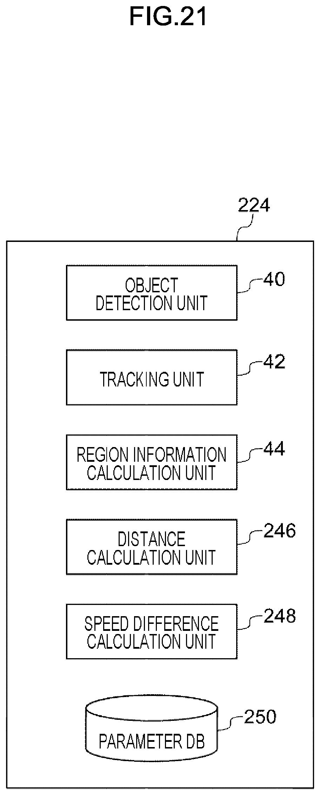

As illustrated in Fig. 21, the speed difference estimation unit 224 includes the object detection unit 40, the tracking unit 42, the region information calculation unit 44, a distance calculation unit 246, a speed difference calculation unit 248, and a parameter database 250.

The object detection unit 40 detects a region representing the target vehicle A from each image of the group of time-series images. At this time, the object detection unit 40 further identifies the type of target vehicle A. Here, the type of the target vehicle A is, for example, a vehicle type.

The region information calculation unit 44 calculates the size of the region representing the tracked target vehicle A for each time, and calculates the ratio of the size of the region representing the tracked target vehicle A to the size of the region representing the target vehicle A at the reference position for each time.

For each time, the distance calculation unit 246 calculates the distance to the target vehicle A at the time by using a relational expression represented using the reference distance corresponding to the type of the target vehicle A, the ratio of the size of the region representing the target vehicle A at the time to the size of the region representing the target vehicle A at the reference position, and the distance to the target vehicle A at the time. Specifically, assuming that the size of the region representing the target vehicle A is an area, the distance to the target vehicle A is calculated by substituting a reference distance obtained in advance for the type of the target vehicle A, and the ratio of the size of the region representing the target vehicle A at the time to the size of the region representing the target vehicle A at the reference position obtained in advance for the type of the target vehicle A into the above expression (2).

Note that in a case where the size of the region representing the target vehicle A is a length, the distance to the target vehicle A is calculated by substituting the reference distance obtained in advance for the type of the target vehicle A and the ratio of the size of the region representing the target vehicle A at the time to the size of the region representing the target vehicle A at the reference position obtained in advance for the type of the target vehicle A into the above expression (1).

The speed difference calculation unit 248 calculates the speed difference between the target vehicle A and the observation vehicle 100 on the basis of the distance to the target vehicle A calculated for each time and the interval of time steps. Specifically, the speed difference between the target vehicle A and the observation vehicle 100 is calculated by dividing a difference in the distance to the target vehicle A between times by the interval of the time steps.

The parameter database 250 stores a reference distance obtained in advance and a size of the region representing the target vehicle A at the reference position for each type of vehicle. For example, it is sufficient if the size of the region representing the target vehicle A at a time of being detected at the reference position in the image vertical direction and the distance to the target vehicle A at that time is obtained in advance for each type of the target vehicle A, and is stored in the parameter database 250 as the size of the region representing the target vehicle A at the reference position and the reference distance. Note that the reference distance is obtained from the dimension of the target vehicle A and angle of view information of the camera 60. For example, the reference distance may be obtained from the width of the target vehicle A and the angle of view information of the camera 60 using the width determined for the vehicle type of the target vehicle A as a dimension of the target vehicle A. For example, a distance at which the entire width of the target vehicle A can be captured may be obtained from horizontal angle of view information of the camera 60, and this distance may be used as the reference distance d. In addition, even if the type of the target vehicle A is not specified, if the dimension of at least a part of the target vehicle A can be obtained, the reference distance may be obtained from the dimension and the angle of view information of the camera 60. That is, it is sufficient if the reference distance is obtained by using, among captured subjects, a subject whose size in the real space can be obtained, and using the relationship with the size of a subject on the image.

<Operation of determination device according to second embodiment>

Next, actions of the determination device 10 will be described.

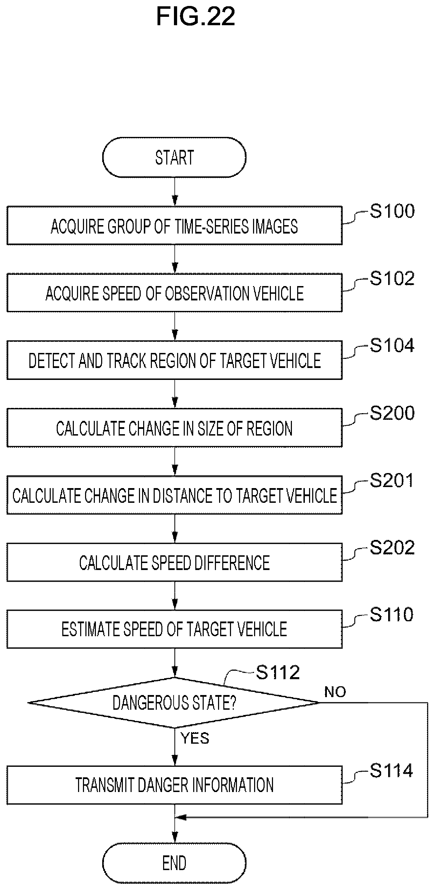

Fig. 22 is a flowchart illustrating a flow of determination processing by the determination device 10. The determination processing is performed by the CPU 11 reading the determination program from the ROM 12 or the storage 14, and loading and executing the determination program in the RAM 13. Further, the group of time-series images captured by the camera 60 and CAN data detected by the sensor 62 when the group of time-series images is captured are input to the determination device 10.

In step S100, the CPU 11, as the image acquisition unit 20, acquires the group of time-series images received by the input unit 15.

In step S102, the CPU 11, as the speed acquisition unit 22, acquires the speed of the observation vehicle 100 when the group of time-series images is captured from the CAN data received by the input unit 15.

In step S104, the CPU 11, as the object detection unit 40, detects a region representing the target vehicle A from each image of the group of time-series images and identifies the type of the target vehicle A. Then, the CPU 11, as the tracking unit 42, tracks the region representing the target vehicle A on the basis of the detection result by the object detection unit 40.

In step S200, the CPU 11, as the region information calculation unit 44, calculates the size of the region representing the tracked target vehicle A for each time, and calculates the ratio of the size of the region representing the tracked target vehicle A to the size of the region representing the target vehicle A at the reference position for each time.

In step S201, as the distance calculation unit 246, the CPU 11 calculates, for each time, the distance to the target vehicle A at the time from the size of the region representing the target vehicle A at the time by using the relational expression represented using the reference distance, the ratio of the size of the region representing the target vehicle A at the time to the size of the region representing the target vehicle A at the reference position, and the distance to the target vehicle A at the time.

In step S202, the CPU 11, as the speed difference calculation unit 248, calculates the speed difference between the target vehicle A and the observation vehicle 100 on the basis of the distance to the target vehicle A calculated for each time and the interval of the time steps. Specifically, the speed difference between the target vehicle A and the observation vehicle 100 is calculated by dividing a difference in the distance to the target vehicle A between times by the interval of the time steps.

In step S110, the CPU 11, as the speed estimation unit 26, estimates the speed of the target vehicle A from the acquired speed of the observation vehicle 100 and the estimated speed difference. In step S112, the CPU 11, as the determination unit 28, determines whether the target vehicle A is in a dangerous state by using the speed difference between the target vehicle A and the observation vehicle 100 or the speed of the target vehicle A. When it is determined that the target vehicle A is in a dangerous state, the process proceeds to step S114, and on the other hand, when it is determined that the target vehicle A is not in the dangerous state, the determination process ends.

In step S114, the communication unit 64 transmits danger information including the determination result by the determination device 10 to a surrounding vehicle or a server of a company via the network. Further, the display unit 16 displays the danger information including the determination result of the dangerous state of the target vehicle A, and ends the determination processing.

As described above, the determination device according to the present embodiment estimates the speed difference between the target vehicle and the observation vehicle using the time-series change in the region representing the target vehicle captured in the group of time-series images and the relational expression represented using the size of the region representing the target vehicle and the distance to the target vehicle, and determines whether the target vehicle is in the dangerous state on the basis of the speed difference. This, it is possible to determine the dangerous state that can be used by other than the observation vehicle by using the group of time-series images captured by the camera mounted at the observation vehicle.

<Modification Examples>

Note that the present invention is not limited to the above-described embodiments, and various modifications and applications can be made without departing from the gist of the present invention.

For example, the case where the target vehicle is faster than the speed of the observation vehicle has been described as an example, but the present invention is not limited thereto. The present invention may be applied even when the target vehicle is slower than the speed of the observation vehicle. In this case, it is sufficient if the size of the region representing the target vehicle at the reference position is obtained on the basis of the region representing the target vehicle detected from the group of time-series images, the ratio of the size of the region representing the target vehicle to the size of the region representing the target vehicle at the reference position is calculated for each time, the pattern representing the time-series change of the ratio is obtained, the time axis is inverted so that the observation vehicle looks faster, and comparison with the pattern for each speed difference is made. In addition, in a case where the speed of the target vehicle is extremely slow on an expressway with a speed limit of 80 km/h, for example, in a case where the target vehicle is a single vehicle that has failed and is stopped on a road shoulder, it is only required to determine that the target vehicle is in a dangerous state and to notify a highway police squad of the detection point of the target vehicle. In addition, in a case where the target vehicle is a vehicle on the oncoming lane, it is only required to determine that the target vehicle is in the dangerous state if the speed difference from the target vehicle is faster than twice the speed limit or slower than the speed limit.

In addition, it may be determined that a traffic jam for each lane occurs as the dangerous state of the target vehicle. In the determination of the congestion for each lane, for example, it is only required to determine that the traffic is congested if the estimated speed of each of the plurality of target vehicles in a predetermined lane is equal to or less than a threshold. Further, when the observation vehicle is traveling at a high speed, it is also assumed that the observation vehicle overtakes a large number of vehicles and the speed difference is large. In such a case, when the speed of the observation vehicle is equal to or more than a predetermined value, the speed difference to be determined as the congestion or the number of overtaken vehicles may be increased.

Further, the case where the region representing the back surface portion of the target vehicle is detected has been described as an example, but the present invention is not limited thereto. For example, a region representing a side surface portion of the target vehicle may be detected. Here, the time-series change in the size of the region representing the target vehicle is different between the back surface portion of the target vehicle and the side surface portion of the target vehicle.

Specifically, a relational expression of the ratio of the length of a side of the region representing the side surface portion of the target vehicle to the length of the side of the region representing the side surface portion of the target vehicle at the reference position, the distance D to the target vehicle, and the reference distance d is expressed by the following expression (3).

$$\text{Ration of length} = \frac{1}{2*(\frac{\text{Distance D}}{d})}$$

$$(3)$$

Further, a relational expression of the ratio of the area of the region representing the side surface portion of the target vehicle to the area of the region representing the side surface portion of the target vehicle at the reference position, the distance D to the target vehicle, and the reference distance d is expressed by the following expression (4).

$$\text{Ration of area} = \frac{1}{2*(\frac{\text{Distance D}}{d})^2}$$

$$(4)$$

In addition, a region representing both the back surface portion and the side surface portion of the target vehicle may be detected. In this case, it is only required to use a relational expression obtained by adding the relational expression related to the region representing the back surface portion of the target vehicle, and the relational expression related to the region representing the side surface portion.

In addition, the speed difference between the target vehicle and the observation vehicle may be estimated using a time-series change in the size of a region representing a part with a fixed size regardless of the type of the target vehicle, for example, the license plate of the target vehicle.

In addition, the case where the target object to be detected is the target vehicle has been described as an example, but the present invention is not limited thereto. The target object to be detected may be other than the target vehicle, and may be, for example, a motorcycle or a person running on a road, a falling object, or a feature such as a road sign, a signboard, or a utility pole. In a case where the target object is a feature, the size of the region representing the target object changes to increase in the group of time-series images. Thus, when it is determined from the estimated speed of the target object that the target object is a feature, it may be notified that the feature is present in the following vehicle, or the position information (longitude and latitude) may be corrected using the distance to the feature estimated using the relational expression. In addition, since the speed of the observation vehicle can be obtained from the estimated speed difference from the target object, the dangerous state of the observation vehicle may be determined.

Further, the case where the road on which the observation vehicle and the target vehicle are traveling is a straight road has been described as an example, but the present invention is not limited thereto. The road on which the observation vehicle and the target vehicle are traveling may be a road having a curvature. In this case, even if there is a curvature on the road, since a short-time change in the region representing the target vehicle is used, the speed difference from the target vehicle may be similarly estimated by regarding the road as a straight road. Alternatively, the speed difference from the target vehicle may be estimated using a relational expression considering the curvature.

Further, the case where there is no distortion in the image captured by the camera or distortion correction is performed in advance has been described as an example, but the present invention is not limited thereto. For example, a relational expression according to the distortion of the lens of the camera may be used, or the speed difference from the target vehicle may be estimated using a partial image obtained by cutting out a central portion of an image with less distortion.

Further, the case where the target vehicle is traveling in a lane different from the lane of the observation vehicle has been described as an example, but the present invention is not limited thereto. A vehicle traveling in the same lane as the observation vehicle may be set as the target vehicle.

Further, the case where the reference position is defined in the image vertical direction and the same pattern or relational expression is used regardless of the lane position has been described as an example, but the present invention is not limited thereto. For example, the reference position in the image vertical direction may be defined for each lane position, and a pattern or a relational expression may be prepared.

In addition, in a case where the target vehicle or the observation vehicle performs a lane change in the period corresponding to the group of time-series images, the time-series change in the size of the region representing the target area suddenly changes, and thus an exceptional process such as sending to another process may be incorporated.

In addition, various processes executed by the CPU reading software (program) in each of the above embodiments may be executed by various processors other than the CPU. Examples of the processors in this case include a programmable logic device (PLD) whose circuit configuration can be changed after the manufacturing, such as a graphics processing unit (GPU) or a field-programmable gate array (FPGA), and a dedicated electric circuit that is a processor having a circuit configuration exclusively designed for executing specific processing, such as an application specific integrated circuit (ASIC). In addition, the determination processing may be executed by one of these various processors, or may be executed by a combination of two or more processors of the same type or different types (for example, a plurality of FPGAs, a combination of a CPU and an FPGA, or the like). More specifically, a hardware structure of the various processors is an electric circuit in which circuit elements such as semiconductor elements are combined.

Further, in each of the above embodiments, the aspect in which the determination program is stored (installed) in advance in the storage 14 has been described, but the present invention is not limited thereto. The program may be provided by being stored in a non-transitory storage medium such as a compact disk read only memory (CD-ROM), a digital versatile disk read only memory (DVD-ROM), and a universal serial bus (USB) memory. In addition, the program may be downloaded from an external device via a network.

Reference Signs List

| | |
|---|---|
| 10 | Determination device |
| 11 | CPU |
| 15 | Input unit |
| 16 | Display unit |
| 17 | Communication interface |
| 20 | Image acquisition unit |
| 22 | Speed acquisition unit |
| 24, 224 | Speed difference estimation unit |
| 26 | Speed estimation unit |
| 28 | Determination unit |
| 30 | Road database |
| 40 | Object detection unit |
| 42 | Tracking unit |
| 44 | Region information calculation unit |
| 46 | Pattern calculation unit |
| 48 | Pattern comparison unit |
| 50 | Pattern database |
| 60 | Camera |
| 62 | Sensor |
| 64 | Communication unit |
| 100 | Observation vehicle |
| 246 | Distance calculation unit |
| 248 | Speed difference calculation unit |
| 250 | Parameter database |
| A | Target vehicle |

**Claims**

1. A determination device that determines whether a target object that is capturable from an observation vehicle or the observation vehicle is in a dangerous state, the determination device comprising:

- an image acquisition unit that acquires a group of time-series images captured by a camera mounted at the observation vehicle;
- a speed difference estimation unit that estimates a speed difference between the target object and the observation vehicle by using a time-series change in a region representing the target object captured in the group of time-series images; and
- a determination unit that determines whether the target object or the observation vehicle is in a dangerous state based on the speed difference,
- wherein the speed difference estimation unit calculates, for each time:

 - a ratio between a size of a region representing a target object at a reference position and a size of a region at the time, and compares a time-series change of the ratio with a time-series change of the ratio obtained in advance for each of the speed differences and estimates a speed difference between the target object and the observation vehicle, or

 - a distance to the target object at the time using a reference distance to the target object at a reference position, a size of a region representing the target object at the reference position, and a size of a region at the time, and the speed difference is estimated from a time-series change in the distance.

**2.** The determination device according to claim 1, further comprising:

 - a speed acquisition unit that acquires a speed of the observation vehicle at a time at which the group of time-series images is captured; and
 - a speed estimation unit that estimates a speed of the target object from a speed of the observation vehicle and the speed difference,
 - wherein the determination unit determines whether the target object or the observation vehicle is in a dangerous state by using a speed of the target object instead of the speed difference.

**3.** The determination device according to claim 1 or 2, wherein the speed difference estimation unit calculates a distance to the target object at the time by using a relational expression represented using the reference distance, a ratio between a size of a region representing the target object at the reference position and a size of a region at the time, and a distance to the target object at the time.

**4.** A determination method in a determination device that determines whether a target object that is capturable from an observation vehicle or the observation vehicle is in a dangerous state, the determination method comprising:

 - acquiring, by an image acquisition unit, a group of time-series images captured by a camera mounted at the observation vehicle;
 - estimating, by a speed difference estimation unit, a speed difference between the target object and the observation vehicle by using a time-series change in a region representing the target object captured in the group of time-series images; and
 - determining, by a determination unit, whether the target object or the observation vehicle is in a dangerous state based on the speed difference,
 - wherein the speed difference estimation unit calculates, for each time:

  - a ratio between a size of a region representing a target object at a reference position and a size of a region at the time, and compares a time-series change of the ratio with a time-series change of the ratio obtained in advance for each of the speed differences and estimates a speed difference between the target object and the observation vehicle, or

  - a distance to the target object at the time using a reference distance to the target object at a reference position, a size of a region representing the target object at the reference position, and a size of a region at the time, and the speed difference is estimated from a time-series change in the distance.

**5.** A determination program for causing a computer to function as the determination device according to any one of claims 1 to 3.

**Patentansprüche**

**1.** Bestimmungsvorrichtung, die bestimmt, ob sich ein Zielobjekt, das von einem Beobachtungsfahrzeug erfassbar ist, oder das Beobachtungsfahrzeug in einem gefährlichen Zustand befindet, die Bestimmungsvorrichtung umfassend:

- eine Bilderlangungseinheit, die eine Gruppe von Zeitreihenbildern erlangt, die durch eine Kamera, die an dem Beobachtungsfahrzeug montiert ist, erfasst wird;
- eine Geschwindigkeitsdifferenzschätzeinheit, die eine Geschwindigkeitsdifferenz zwischen dem Zielobjekt und dem Beobachtungsfahrzeug durch Verwenden einer Zeitreihenänderung in einem Bereich schätzt, der das Zielobjekt, das in der Gruppe von Zeitreihenbildern erfasst wird, darstellt; und
- eine Bestimmungseinheit, die basierend auf der Geschwindigkeitsdifferenz bestimmt, ob sich das Zielobjekt oder das Beobachtungsfahrzeug in einem gefährlichen Zustand befindet,
- wobei die Geschwindigkeitsdifferenzschätzeinheit für jeden Zeitpunkt berechnet:

- ein Verhältnis zwischen einer Größe eines Bereichs, der ein Zielobjekt an einer Referenzposition darstellt, und einer Größe eines Bereichs zu dem Zeitpunkt, und eine Zeitreihenänderung des Verhältnisses mit einer Zeitreihenänderung des Verhältnisses, die im Voraus für jede der Geschwindigkeitsdifferenzen erhalten wird, vergleicht und eine Geschwindigkeitsdifferenz zwischen dem Zielobjekt und dem Beobachtungsfahrzeug schätzt, oder
- eine Entfernung zu dem Zielobjekt zu dem Zeitpunkt unter Verwendung einer Referenzentfernung zu dem Zielobjekt an einer Referenzposition, einer Größe eines Bereichs, der das Zielobjekt an der Referenzposition darstellt, und einer Größe eines Bereichs zu dem Zeitpunkt, und wobei die Geschwindigkeitsdifferenz aus einer Zeitreihenänderung in der Entfernung geschätzt wird.

2.    Bestimmungsvorrichtung nach Anspruch 1, ferner umfassend:

- eine Geschwindigkeitserlangungseinheit, die eine Geschwindigkeit des Beobachtungsfahrzeugs zu einem Zeitpunkt erlangt, zu dem die Gruppe von Zeitreihenbildern erfasst wird; und
- eine Geschwindigkeitsschätzeinheit, die eine Geschwindigkeit des Zielobjekts aus einer Geschwindigkeit des Beobachtungsfahrzeugs und der Geschwindigkeitsdifferenz schätzt,
- wobei die Bestimmungseinheit bestimmt, ob sich das Zielobjekt oder das Beobachtungsfahrzeug in einem gefährlichen Zustand befindet, durch Verwenden einer Geschwindigkeit des Zielobjekts anstelle der Geschwindigkeitsdifferenz.

3.    Bestimmungsvorrichtung nach Anspruch 1 oder 2, wobei die Geschwindigkeitsdifferenzschätzeinheit eine Entfernung zu dem Zielobjekt zu dem Zeitpunkt durch Verwenden eines Vergleichsausdrucks berechnet, der unter Verwendung der Referenzentfernung, eines Verhältnisses zwischen einer Größe eines Bereichs, der das Zielobjekt an der Referenzposition darstellt, und einer Größe eines Bereichs zu dem Zeitpunkt und einer Entfernung zu dem Zielobjekt zu dem Zeitpunkt dargestellt wird.

4.    Bestimmungsverfahren in einer Bestimmungsvorrichtung, die bestimmt, ob sich ein Zielobjekt, das von einem Beobachtungsfahrzeug erfassbar ist, oder das Beobachtungsfahrzeug in einem gefährlichen Zustand befindet, das Bestimmungsverfahren umfassend:

- Erlangen, durch eine Bilderlangungseinheit, einer Gruppe von Zeitreihenbildern, die durch eine Kamera, die an dem Beobachtungsfahrzeug montiert ist, erfasst wird;
- Schätzen, durch eine Geschwindigkeitsdifferenzschätzeinheit, einer Geschwindigkeitsdifferenz zwischen dem Zielobjekt und dem Beobachtungsfahrzeug durch Verwenden einer Zeitreihenänderung in einem Bereich, der das Zielobjekt, das in der Gruppe von Zeitreihenbildern erfasst wird, darstellt; und
- Bestimmen, durch eine Bestimmungseinheit, ob sich das Zielobjekt oder das Beobachtungsfahrzeug in einem gefährlichen Zustand befindet, basierend auf der Geschwindigkeitsdifferenz,
- wobei die Geschwindigkeitsdifferenzschätzeinheit für jeden Zeitpunkt berechnet:

- ein Verhältnis zwischen einer Größe eines Bereichs, der ein Zielobjekt an einer Referenzposition darstellt, und einer Größe eines Bereichs zu dem Zeitpunkt, und eine Zeitreihenänderung des Verhältnisses mit einer Zeitreihenänderung des Verhältnisses, die im Voraus für jede der Geschwindigkeitsdifferenzen erhalten wird, vergleicht und eine Geschwindigkeitsdifferenz zwischen dem Zielobjekt und dem Beobachtungsfahrzeug schätzt, oder
- eine Entfernung zu dem Zielobjekt zu dem Zeitpunkt unter Verwendung einer Referenzentfernung zu dem Zielobjekt an einer Referenzposition, einer Größe eines Bereichs, der das Zielobjekt an der Referenzposition darstellt, und einer Größe eines Bereichs zu dem Zeitpunkt, und wobei die Geschwindigkeitsdifferenz aus einer Zeitreihenänderung in der Entfernung geschätzt wird.

**5.** Bestimmungsprogramm zum Veranlassen eines Computers, als die Bestimmungsvorrichtung nach einem der Ansprüche 1 bis 3 zu fungieren.

**Revendications**

**1.** Dispositif de détermination qui détermine si un objet cible pouvant être capturé à partir d'un véhicule d'observation ou le véhicule d'observation est dans un état dangereux, le dispositif de détermination comprenant :

- une unité d'acquisition d'images qui acquiert un groupe d'images de série chronologique capturées par une caméra montée sur le véhicule d'observation ;
- une unité d'estimation de différence de vitesse qui estime une différence de vitesse entre l'objet cible et le véhicule d'observation en utilisant une variation de série chronologique dans une région représentant l'objet cible capturé dans le groupe d'images de série chronologique ; et
- une unité de détermination qui détermine si l'objet cible ou le véhicule d'observation se trouve dans un état dangereux sur la base de la différence de vitesse,
- dans lequel l'unité d'estimation de différence de vitesse calcule, pour chaque temps :

- un rapport entre une taille d'une région représentant un objet cible à une position de référence et une taille d'une région au moment donné, et compare une variation de série chronologique du rapport avec une variation de série chronologique du rapport obtenue à l'avance pour chacune des différences de vitesse et estime une différence de vitesse entre l'objet cible et le véhicule d'observation, ou
- une distance par rapport à l'objet cible au moment donné à l'aide d'une distance de référence par rapport à l'objet cible à une position de référence, une taille d'une région représentant l'objet cible à la position de référence et une taille d'une région au moment donné, et la différence de vitesse est estimée à partir d'une variation de série chronologique de la distance.

**2.** Dispositif de détermination selon la revendication 1, comprenant en outre :

- une unité d'acquisition de vitesse qui acquiert une vitesse du véhicule d'observation à un moment où le groupe d'images de série chronologique est capturé ; et
- une unité d'estimation de vitesse qui estime une vitesse de l'objet cible à partir d'une vitesse du véhicule d'observation et de la différence de vitesse,
- dans lequel l'unité de détermination détermine si l'objet cible ou le véhicule d'observation est dans un état dangereux en utilisant une vitesse de l'objet cible au lieu de la différence de vitesse.

**3.** Dispositif de détermination selon la revendication 1 ou 2, dans lequel l'unité d'estimation de différence de vitesse calcule une distance par rapport à l'objet cible au moment donné en utilisant une expression relationnelle représentée à l'aide de la distance de référence, un rapport entre une taille d'une région représentant l'objet cible à la position de référence et une taille d'une région au moment donné, et une distance par rapport à l'objet cible au moment donné.

**4.** Procédé de détermination dans un dispositif de détermination qui détermine si un objet cible pouvant être capturé à partir d'un véhicule d'observation ou le véhicule d'observation est dans un état dangereux, le procédé de détermination comprenant :

- l'acquisition, par une unité d'acquisition d'images, d'un groupe d'images de série chronologique capturées par une caméra montée sur le véhicule d'observation ;
- l'estimation, par une unité d'estimation de différence de vitesse, d'une différence de vitesse entre l'objet cible et le véhicule d'observation en utilisant une variation de série chronologique dans une région représentant l'objet cible capturé dans le groupe d'images de série chronologique ; et
- le fait de déterminer, par une unité de détermination, si l'objet cible ou le véhicule d'observation se trouve dans un état dangereux sur la base de la différence de vitesse,
- dans lequel l'unité d'estimation de la différence de vitesse calcule, pour chaque temps :

- un rapport entre une taille d'une région représentant un objet cible à une position de référence et une taille d'une région au moment donné, et compare une variation de série chronologique du rapport avec une variation de série chronologique du rapport obtenue à l'avance pour chacune des différences de vitesse et estime une différence de vitesse entre l'objet cible et le véhicule d'observation, ou

- une distance par rapport à l'objet cible au moment donné à l'aide d'une distance de référence par rapport à l'objet cible à une position de référence, une taille d'une région représentant l'objet cible à la position de référence et une taille d'une région au moment donné, et la différence de vitesse est estimée à partir d'une variation de série chronologique de la distance.

5. Programme de détermination pour faire fonctionner un ordinateur comme dispositif de détermination selon l'une quelconque des revendications 1 à 3.

# FIG.1

FIG.2

# FIG.3

# FIG.4

# FIG.5

# FIG.6

# FIG.7

TIME t

TIME t+a

TIME t+b

# FIG.8

TIME t

REFERENCE POSIT

TIME t+a

TIME t+b

# FIG.9

RATIO OF AREA

1

0.5

0.25

0.1

d(m)    2d(m)    3d(m)    4d(m)

DISTANCE D BETWEEN TARGET VEHICLE AND OBSERVATION VEHICLE

EP 4 322 133 B1

# FIG.10

# FIG.11

EP 4 322 133 B1

# FIG.12

# FIG.13

RATIO OF AREA

SPEED DIFFERENCE +30km/h

ELAPSED TIME

EP 4 322 133 B1

# FIG.14

RATIO OF AREA

SPEED DIFFERENCE+20km/h

SPEED DIFFERENCE+10km/h

SPEED DIFFERENCE+50km/h

SPEED DIFFERENCE+30km/h

SPEED DIFFERENCE+40km/h

ELAPSED TIME

# FIG.15

# FIG.16

11 — CPU

12 — ROM

13 — RAM

14 — STORAGE

15 — INPUT UNIT

16 — DISPLAY UNIT

17 — COMMUNICATION I/F

10

19

# FIG.17

# FIG.18

24

| OBJECT DETECTION UNIT | 40 |
| TRACKING UNIT | 42 |
| REGION INFORMATION CALCULATION UNIT | 44 |
| PATTERN CALCULATION UNIT | 46 |
| PATTERN COMPARISON UNIT | 48 |
| PATTERN DB | 50 |

# FIG.19

N FRAME    N+1 FRAME    N+2 FRAME

PIXEL SET OF
CURRENT FRAME
IN REGION X

PIXEL SET OF
FRONT AND REAR FRAMES
IN REGION X

# FIG.20

```
                        ┌──────────────┐
                        │    START     │
                        └──────┬───────┘
                               │
            ┌──────────────────▼──────────────────┐   ┌─S100
            │  ACQUIRE GROUP OF TIME-SERIES IMAGES │
            └──────────────────┬──────────────────┘
                               │
            ┌──────────────────▼──────────────────┐   ┌─S102
            │   ACQUIRE SPEED OF OBSERVATION VEHICLE│
            └──────────────────┬──────────────────┘
                               │
            ┌──────────────────▼──────────────────┐   ┌─S104
            │  DETECT AND TRACK REGION OF TARGET VEHICLE│
            └──────────────────┬──────────────────┘
                               │
            ┌──────────────────▼──────────────────┐   ┌─S106
            │    CALCULATE CHANGE IN SIZE OF REGION │
            └──────────────────┬──────────────────┘
                               │
       ┌────────────────────────▼───────────────────────┐   ┌─S108
       │  COMPARE PATTERN WITH EACH SPEED DIFFERENCE     │
       │       AND ESTIMATE SPEED DIFFERENCE             │
       └────────────────────────┬───────────────────────┘
                               │
            ┌──────────────────▼──────────────────┐   ┌─S110
            │     ESTIMATE SPEED OF TARGET VEHICLE  │
            └──────────────────┬──────────────────┘
                               │
                          ┌────▼────┐   ┌─S112
                         ◇ DANGEROUS  ◇──── NO ──┐
                          │  STATE?  │           │
                          └────┬────┘            │
                             YES│                │
            ┌──────────────────▼──────────────────┐   ┌─S114
            │      TRANSMIT DANGER INFORMATION     │   │
            └──────────────────┬──────────────────┘   │
                               │◄──────────────────────┘
                        ┌──────▼───────┐
                        │     END      │
                        └──────────────┘
```

# FIG.21

224

OBJECT
DETECTION UNIT ⌐40

TRACKING UNIT ⌐42

REGION INFORMATION
CALCULATION UNIT ⌐44

DISTANCE
CALCULATION UNIT ⌐246

SPEED DIFFERENCE
CALCULATION UNIT ⌐248

PARAMETER DB ⌐250

# FIG.22

```
                    ┌─────────────┐
                    │    START    │
                    └──────┬──────┘
                           │
           ┌───────────────▼─────────────────┐
           │  ACQUIRE GROUP OF TIME-SERIES IMAGES │────S100
           └───────────────┬─────────────────┘
                           │
           ┌───────────────▼─────────────────┐
           │  ACQUIRE SPEED OF OBSERVATION VEHICLE │────S102
           └───────────────┬─────────────────┘
                           │
           ┌───────────────▼─────────────────┐
           │  DETECT AND TRACK REGION OF TARGET VEHICLE │────S104
           └───────────────┬─────────────────┘
                           │
           ┌───────────────▼─────────────────┐
           │  CALCULATE CHANGE IN SIZE OF REGION │────S200
           └───────────────┬─────────────────┘
                           │
           ┌───────────────▼─────────────────┐
           │  CALCULATE CHANGE IN DISTANCE TO TARGET VEHICLE │────S201
           └───────────────┬─────────────────┘
                           │
           ┌───────────────▼─────────────────┐
           │  CALCULATE SPEED DIFFERENCE │────S202
           └───────────────┬─────────────────┘
                           │
           ┌───────────────▼─────────────────┐
           │  ESTIMATE SPEED OF TARGET VEHICLE │────S110
           └───────────────┬─────────────────┘
                           │
                        ◇─────────◇  ────S112
                       ╱ DANGEROUS  ╲       NO
                       ╲  STATE?    ╱─────────┐
                        ◇─────────◇          │
                           │ YES             │
           ┌───────────────▼─────────────────┐  │
           │  TRANSMIT DANGER INFORMATION │────S114 │
           └───────────────┬─────────────────┘  │
                           │◄────────────────────┘
                    ┌──────▼──────┐
                    │     END     │
                    └─────────────┘
```

# FIG.23

# FIG.24

# FIG.25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2018206210 A

- CN 111231952 A

### Non-patent literature cited in the description

- PS Series Loop Coil Type Vehicle Detector Specification Manual. Mirai Giken Co., Ltd

- Successful automatic detection of dangerous driving utilizing artificial intelligence (AI). *NTT Communications Corporation*, 26 September 2016, https://www.ntt.com/about-us/press-releases/news/article/2016/20160926_2.html>